# EUROPEAN PATENT APPLICATION

(11) **EP 1 443 774 A1**
(43) Date of publication of application: **04.08.2004**
(21) Application number: 03360010.7
(22) Date of filing: 24.01.2003
(51) Int. Cl.: H04N 7/64, H04N 7/50

(54) **A method of encoding and decoding of data packets**

(71) Applicant: ALCATEL, 75008 Paris (FR)
(72) Inventor: Nguyen, Hang, 92110 Clichy-la-Garenne (FR); Brouet, Jérome, 75014 Paris (FR)
(74) Representative: Richardt, Markus Albert

(57) **Abstract**

The present invention relates to a method of encoding and decoding a data packet and to a telecommunication system for transmitting of data packets (100, 102,...; 222, 224,...), the data packets having signalling data (104) and payload data, the telecommunication system comprising:
- means (208) for encoding the signalling data by means of a fixed length coding scheme,
- means (210) for encoding the payload data by means of a variable length coding scheme,
- means for transmitting the encoded data packets via a channel (206),
- means (214) for decoding the signalling data by means of the fixed length coding scheme,
- means (216) for decoding the payload data by means of the variable length coding scheme.

## Description

### Field of the invention

The present invention relates to the field of encoding and decoding of data packets, and more particularly without limitation to wireless transmission of packetized data.

### Background and prior art

Usually source encoding is used for data compression in order to reduce the amount of data to be transmitted over a channel having a limited capacity. Such data compressing encoding is especially useful if large data amounts are to be transmitted in real time.

Variable-length codes, also called Huffman code, is the most popular data compression technique used for solving channel bandwidth bottleneck in many image compression standards such as JPEG, MPEG-2, and H263 (cf. D.A. Huffman "A method for the construction of minimum-redundancy codes" in *Proc. IRE,* vol. 40, pp.1098-1011, Sept 1952). Usage of a variable length code (VLC) results in minimal redundancy of the encoded data and is thus more efficient at reducing the bit rate than fixed-length codes (FLC).

The main problem in VLC bit stream transmission is to maintain the synchronisation between the encoder and the decoder. Although VLC ensures optimal encoding, i.e. minimal redundancy, it is highly sensitive to channel errors when VLCs are transmitted consecutively through a noisy channel. Any bit error in VLC bit stream can lead to a loss of synchronisation and cause error propagation. Mostly, errors may propagate for a considerable period, with an ensuing loss of many dozens of words, before synchronisation is re-established. Therefore, designing VLC that can easily recover the synchronisation has been acknowledged as a very important issue for wireless image transmission.

A hybrid variable length code (HVLC) has been proposed by Y.S. Lee, C.M. Yu. C.H. Chang, and C.Y. Lee, "HVLC: Error Correctable Hybrid Variable Length Code for Image Coding in Wireless Transmission", in *IEEE ICASSP 2000,* June 2000.

The advantage of HVLC is that it has good tolerance to random and burst errors in worsening channel conditions. Still the average code word length is close to the optimal.

S.W. Golomb and B. Gordon "Codes with bounded synchronization delay", *inform Contr.,* vol 8, pp.355-372, 1965 and V.I. Levenshtein, "Certain properties of code systems," *Sov. Phis.* - Dokl., vol 6, no.6, pp858-860, 1962, suggest codes with bounded synchronization delay.

R.M. Capocelli, L. Gargano, and U. Vaccaro, "On the characterization of statistically synchronizable variable length codes", *IEEE Trans. Inform. Theory,* vol 34, pp817-825, July 1988 and R.M. Capocelli, A.A. De Santis, L. Gargano, and U. Vaccaro, "On the construction of statistically synchronizable codes," *IEEE Trans. Inform. Theory,* vol 38, pp.407-414, Mar. 1992 suggest statistically synchronizable codes.

K.W. Wei and R.A. Sholtz, "On the characterization of statistically synchronizable codes", *IEEE Trans. Inform, Theory.* Vol IT-26, pp.733-735, Nov 1980; T.J. Ferguson and J.H. Rabinowitz, "Self-synchronizing Huffman codes, "IEEE Trans. Inform *Theory* vol. IT-30, no. 4, pp.687-693, July 1984; B.L. Montgomery and J. Abrahams, "Synchronization of binary source codes", *IEEE Trans. Inform. Theory,* vol. IT-32, no. 6, pp.849-854, Nov 1986; J.C. Maxted and J.P. Robinson, "Error recovery for variable length codes," *Bell Syst. Tech J.,* vol. 31, no.6, Nov 1985 and M.R. Titchener, "Generalised T-codes: Extended construction algorithm for self-synchronizing codes," in *Proc. Inst. Elec. Eng. pt, F. Computers and Digital Techniques, vol. 143, no.3, June 1996* propose variable-length code constructions, which enable the decoder to correctly synchronize.

For example, in HVLC multiple virtual channels are used. Each code word of HVLC is combined by several code words of the same word lengths. Two virtual channels called 'base channel' (BC) and 'main channel' (MC) are used in the code structure of HVLC. MC and BC codes are interleaved in even and odd bit locations, respectively. HVLC will only have 50% probability to lose synchronization within one code word when an error occurs in the BC code. However, it is a substantial disadvantage of HVLC and other prior art suggestions for providing synchronizable VLC code that the complexity of the encoding is substantially increased.

The present invention therefore aims to provide an improved encoding and decoding method for data packets, especially for wireless transmission over noisy channels.

### Summary of the invention

The present invention provides for an improved method of encoding a data packet, a decoding method and a method of transmitting a data packet as well as a corresponding computer program product, encoder, decoder and telecommunications system.

In essence, two different coding schemes are used for encoding of a data packet: a fixed length coding (FLC) scheme is used for encoding of the signalling data of the data packet, such as the header or the footer data, and a VLC scheme is used for encoding of the payload data. This has the advantage that a transmission error in the VLC encoded payload data does not propagate from one data packet to the next and therefore remains isolated with no or little visible impact on a video transmission. For encoding of the signalling data any fixed length coding scheme can be used, including error correcting codes. This results in a small increase of the data volume and a very substantial increase of the picture signal to noise ratio.

The present invention is particularly advantageous for real-time audio and/or video transmissions over noisy channels, such as over a cellular wireless telecommunication network. In such networks it is likely that a transmission error occurs in the transmission of the data packet, but it is unlikely that the complete packet is lost. The present invention enables to limit the transmission error to the data packet where the error occurred and prevents that the error propagates through consecutive data packets.

However application of the present invention is not limited to wireless communication but can also be used for communication over the Internet, for the real-time transport protocol (RTP) and other protocols. Examples for applications of the present invention include the following:
- source encoder,
- RTP level when building the video flows into RTP/UDP/IP frames,
- SNDCP/PDCP layers for cellular systems (i.e. in NSS equipment),
- RLC/MAC level (in a RAN equipment),
- A dedicated video compression function between RTP and physical layer of the wireless link (e.g. in RTP/UDP/IP header compression function).

### Brief description of the drawings

Preferred embodiments of the invention will be explained in greater detail by making reference to the drawings in which:
- Figure 1: is illustrative of a bit stream of data packets,
- Figure 2: is a block diagram of a telecommunication system.

### Detailed description

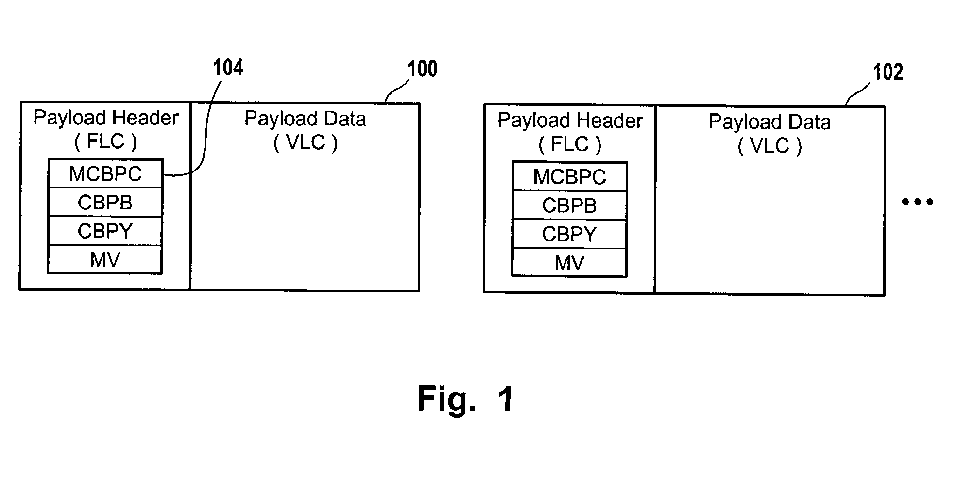

Figure 1 shows a bit stream of data packets 100, 102, ... Data packet 100 contains payload data and signalling data. For example the signalling data indicates the coding options which have been used for coding of the payload data. In the example considered here the signalling data is placed in front of the payload data in the payload header of the data packet 100. However, it is to be noted that the signalling data can also be placed at the end of the data packet 100 or at another defined position. The other data packets 102, ... of the bit stream have the same structure as data packet 100.

The fields of a H.263-type payload header depend on the packetization mode used. The header information includes some frame level information such as source format, picture types, temporal reference and options used. Further the payload header can include a field for motion vector predictors.

In accordance with H.263 standard, the codes for the header fields MCDPC, CBPB, CBPY and MV are variable length. This header data 104 is encoded by means of a fixed length code (FLC) in accordance with the preferred embodiment of the invention considered here. The advantage of FLC is increased robustness as compared to VLC. In particular, an error correcting FLC can be used to further increase the robustness of the data transmission over a noisy channel.

In contrast to the header data 104 the payload data is encoded by means of a VLC scheme for maximum data compression. Preferably an entropy compression technique such as Hoffman code, arithmetic code, RVLC or UVLC is utilised.

Due to the robustness of the encoding of the data header 104 a transmission error is more likely to occur in the payload data than in the payload header. If an error-correcting fixed length code is used for the header data 104 a transmission error in the transmission of the header data 104 is even correctable. On the other hand a transmission error in the payload data has only very limited impact on the overall data transmission as it only affects the data packet where the transmission error occurs but not the subsequent data packets as a propagation of the error is avoided. This is due to the fact the subsequent header data 104 of the subsequent data packet is not VLC but FLC coded which has the effect of segmentation of the coding. Due to this segmentation a transmission error of the payload data remains isolated within the data packet where the error occurred.

In typical video sequences, and in the H263 standard, the header fields: MCBPC, CBPB, CBPY and MV (motion vectors) represent 2% of the bit stream. In the standard H263 bit stream, all these 2% of the bit stream are sensitive to synchronization loss. In the new solution, all these header fields are no more sensitive to synchronization loss.

Simulations show that a gain of 20 dB in PSNR (Picture Signal to Noise Ratio), an objective metric to quantify video quality, is obtained.

| Video streaming sequences | VLC coding (PSNR in dB) | Fixed header (PSNR in dB) | Gain (PSNR in dB) |
|---|---|---|---|
| Foreman | 6.9 | 25.7 | 18.8 |
| Irene | 21.4 | 42.9 | 21.5 |
| Mother-daughter | 14.5 | 37.5 | 23 |

To get these results, an error on one bit of the header fields MCBPC, CBPB, CBPY and MV is created in the standard H263 bit stream (first column) and in the new solution H263 bit stream (second column). For the same video sequence, the error is on the same header field, the same position and the same code-word.

The only disadvantage of this solution is a small increase of 4% of the bit rate, but the gain on the video quality is much more important.

It is to be noted that the present invention is not limited to wireless communication but that it can also be employed for Internet and other real-time data communication. For examples the principles of the invention can also be employed on RTP-H.263 packetization (cf. JAVIC Project, Loss Resilient Video Coding, Progress Report, James T. Chung-How and David R. Bull, University of BristolJune, 1998 (http://www-mice.cs.ucl.ac.uk/multimedia/projects/javic/docs/uob_wp2_june_98.doc).

Examples of other VLC coding mechanisms for which the present invention can be used include mpeg4, jpeg, h26L, ... and other coding mechanisms which have signalling data and payload data. In accordance with the invention the signalling data is not VLC coded but FLC coded while the payload data still is VLC coded.

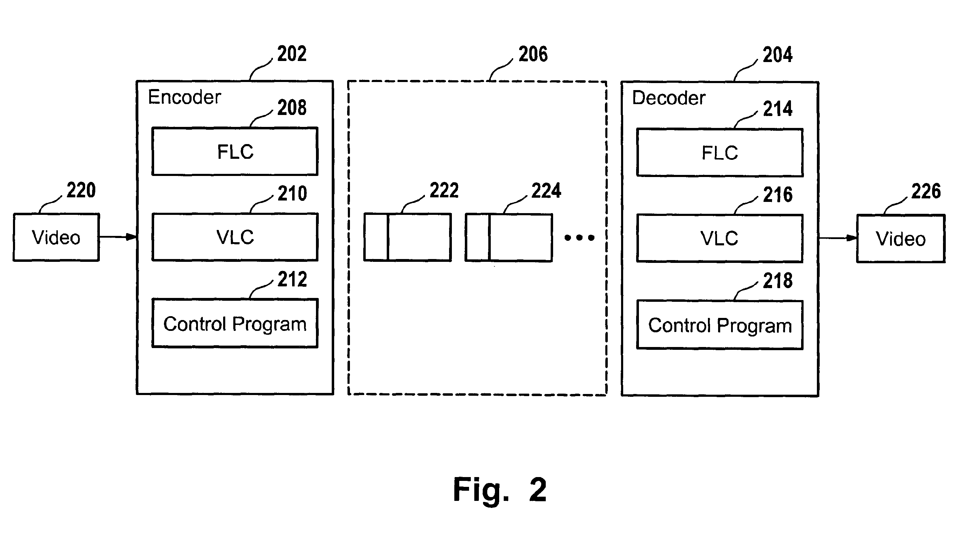

Figure 2 shows a block diagram of a telecommunication system 200; the telcommunication system 200 has a data source 202 which comprises an encoder and a data sink 204 which comprises a decoder. The data source 202 and the data sink 204 are coupled by transmission channel 206. For example channel 206 is a wireless link, such as in accordance with the GSM or UMTS standards.

The encoder of data source 202 has module 208 for implementing a FLC encoding scheme, module 210 for implementing a VLC encoding scheme and a control program 212 for controlling operation of the encoder.

Decoder of data sink 204 has a symmetric functionality, i.e. module 214 for FLC decoding, module 216 for VLC decoding, and control program 218 for controlling the operation of the decoder of data sink 204.

The encoder of data source 202 transforms video data 220 into a sequence of data packets 222, 224, ... having the same or a similar structure as the data packets 100, 102, ... of figure 1.

In operation control program 212 generates header data for the next data packet of the bit stream. By means of module 208 the header data is fixed length coded. The payload data of the data packet is variable length coded by means of module 210. The resulting data packet is outputted from the encoder of data source 202 and transmitted over channel 206 to decoder 204. By means of control program 218 the header data is separated from the payload data and decoded by means of module 214; the payload data is decoded by means of module 216. The decoded video data 226 is outputted from decoder 204.

### List of Reference Numerals

- 100: data product
- 102: data product
- 104: header data
- 200: telecommunication system
- 202: data source
- 204: data source
- 206: channel
- 208: module
- 210: module
- 214: module
- 216: module
- 218: control program
- 220: video data
- 222: data packet
- 224: data packet
- 226: video data

## Claims

1. A method of encoding a data packet, the data packet having signalling data and payload data, the method comprising the steps of:
- encoding the signalling data by means of a fixed length coding scheme,
- encoding the payload data by means of a variable length coding scheme.

2. A method of decoding a data packet, the data packet having signalling data and payload data, the method comprising the steps of:
- decoding the signalling data by means of a fixed length coding scheme,
- decoding the payload data by means of a variable length coding scheme.

3. A method of transmitting a data packet, the data packet having signalling data and payload data, the method comprising the steps of:
- encoding the signalling data by means of a fixed length coding scheme,
- encoding the payload data by means of a variable length coding scheme,
- transmitting of the encoded data packet over a channel,
- decoding the signalling data by means of the fixed length coding scheme,
- decoding the payload data by means of the variable length coding scheme

4. The method of claim 3, whereby the channel is provided by a cellular wireless telecommunication network.

5. The method of claim 3, whereby the payload data comprises audio and/or video data.

6. The method of claim 3, whereby the data packet belongs to an H.263-type bit stream and whereby the signalling data of the signalling fields are encoded by means of the fixed length coding scheme.

7. A computer program product, in particular digital storage medium, comprising program means for encoding of a data packet, the data packet having signalling data and payload data, the program means being adapted to perform the steps of:
- encoding the signalling data by means of a fixed length coding scheme,
- encoding the payload data by means of a variable length coding scheme.

8. An encoder for encoding a data packet (100, 102,...; 222, 224,...) , the data packet having signalling data (104) and payload data, the encoder comprising:
- means (208) for encoding the signalling data by means of a fixed length coding scheme,
- means (210) for encoding the payload data by means of a variable length coding scheme.

9. A decoder for decoding a data packet (100, 102,...; 222, 224,...), the data packet having signalling data (104) and payload data, the decoder comprising:
- means (214) for decoding the signalling data by means of a fixed length coding scheme,
- means (216) for decoding the payload data by means of a variable length coding scheme.

10. A telecommunication system for transmitting of data packets (100, 102,...; 222, 224,...), the data packets having signalling data (104) and payload data, the telecommunication system comprising:
- means (208) for encoding the signalling data by means of a fixed length coding scheme,
- means (210) for encoding the payload data by means of a variable length coding scheme,
- means for transmitting the encoded data packets via a channel (206),
- means (214) for decoding the signalling data by means of the fixed length coding scheme,
- means (216) for decoding the payload data by means of the variable length coding scheme.
